# EUROPEAN PATENT APPLICATION

(11) **EP 4 738 905 A1**
(43) Date of publication of application: **06.05.2026**
(21) Application number: 24383209.4
(22) Date of filing: 05.11.2024
(51) Int. Cl.: H04W 12/104, H04W 4/02, H04W 12/63, H04W 12/06, H04W 4/80

(54) **METHOD AND SYSTEM TO PROVE A USER'S GEOLOCATION**

(71) Applicant: Callstamp Communications, SL, 28232 Las Rozas de Madrid (ES)
(72) Inventor: ANGUIANO JIMÉNEZ, Jose María, 28016 Madrid (ES); DE LA FUENTE RODRÍGUEZ, Adolfo, 28221 Majadahonda (ES); ROMERO BARRERA, Lisardo, 28250 Torrelodones (ES); SÁNCHEZ FUENTES, Pedro Joaquín, 28609 Sevilla la Nueva (ES); BESADA JUEZ, Alejandro, 28049 Madrid (ES)
(74) Representative: Torner, Juncosa I Associats, SL

(57) **Abstract**

A method and system to prove a user's geolocation are provided. The method comprises obtaining a geoposition of a user by a geoposition device; carrying out a proximity validation between the geopositioning device and a mobile device using a Bluetooth connection; upon successful proximity validation, a computer server receiving the geoposition of the user and the geoposition of the mobile device using a cryptographic protocol; receiving, by the mobile computing device, from the computer server, a notification regarding successful geoposition validation with the geoposition device; recording, in real time, a voiced video of the user by a camera and microphone of the mobile computing device, the voiced video being recorded while the user is uttering a given phrase or word; detecting a user's unframing movement by the mobile computing device; and creating, by the mobile computing device, a geo-evidence for the user using the geoposition of the mobile computing device and the recorded voiced video.

## Description

### TECHNICAL FIELD

The present invention generally relates to geolocation methods and systems. Particularly, the present invention relates to a method and system for proving a person's geolocation at any given time.

### BACKGROUND OF THE INVENTION

Proving a person's location at a specific date can often be challenging. Nowadays, it is common to rely on circumstantial evidence to presume that someone was at a particular place during certain dates. This includes providing as proof of residence documents such as airline tickets, boarding passes, lease agreements, hotel receipts, or records of credit card transactions. While these forms of evidence help allegedly confirm a person's presence or residence they are not always compelling.

Accurately proving a person's location can serve different purposes, such as verifying habitual residence for tax purposes or complying with other legal, security, or regulatory requirements.

Thus, new methods and systems for proving a user's geolocation are therefore needed.

### DESCRIPTION OF THE INVENTION

The object of the present invention is the provision of a reliable and tamper-evident geolocation proof, linked to a specific user/person.

This object is fulfilled by a method with the characteristics of claim 1 and by a system with the features of claim 12.

The present invention proposes, according to one aspect, a method to prove/confirm a user's geolocation. The method comprises obtaining a geoposition of a user by a geoposition device; carrying out a proximity validation between the geopositioning device and a mobile computing device using a Bluetooth connection; upon successful proximity validation between the geoposition device and the mobile computing device, the geoposition device further transmitting the obtained geoposition of the user to a computer server using a cryptographic protocol, and the mobile computing device also transmitting its own geoposition to the computer server using a cryptographic protocol; notifying, by the computer server, to the mobile computing device, the successful geoposition validation with the geoposition device; recording a voiced video of the user (e.g. a video selfie) by at least one camera and microphone of the mobile computing device, the voiced video being recorded while the user is uttering a given phrase or word; detecting a user's unframing movement by the mobile computing device; and creating, by the mobile computing device, a geo-evidence for the user using its own geoposition and the recorded voiced video.

In some embodiments, the method further obtains at least one video frame of the recorded voiced video, and creates a map using the obtained video frame and the geoposition of the mobile computing device.

In some embodiments, the method further hashes the created map with a first hash, and forwards the hashed map to a first blockchain network, and hashes the recorded voiced video with a second hash, and forwards the hashed voiced video to a second blockchain network. The incorporation of both hashes in the blockchains can be done by executing a "Smart contract". For example, the SHA-256 algorithm can be used for the hashing processes.

In some embodiments, the given phrase or word is periodically changed. For instance, the word or phrase can be changed daily. Alternatively, it can be changed every two or more days. Even, it can be changed each time a user's geolocation has to be proven.

In some embodiments, the recorded voiced video is stored in a memory or database. Thus, a historic of videos with voices of the user can be obtained, which can later be used to match with those of the user who intends to prove his/her geolocation.

In some embodiments, the geoposition of the user is obtained by satellite triangulation.

In some embodiments, the cryptographic protocol comprises a SSL protocol.

In some embodiments, the geoposition device comprises a private key based on asymmetric key cryptography under PKI protocol, and the computer server comprises a corresponding public key.

In some embodiments, access to the information and configuration of the geopositioning device is secured with a password. This password may consist of various characters, including letters, numbers, and symbols. Naturally, a longer password enhances security. Particularly, the password is known solely to the owner of the computer server. Furthermore, in some embodiments, the device will be locked if an incorrect password is entered more than three times, thereby preventing unauthorized access and increasing resilience against fake geopositions.

The user's unframing movement serves to verify that the recording is not being conducted from a screen. This movement may involve shifting the mobile computing device towards and away from the user, up and down relative to the user, left and right, or any combination of these directions.

In some embodiments, a timeout parameter is set such that if the specified timeout period elapses without detecting the user's unframing movement, the method is automatically canceled.

The present invention also proposes, according to another aspect, a system to prove a user's geolocation. The system comprises: a geoposition device for obtaining a geoposition of a user; a mobile computing device; and a computer server. The computer server, upon a successful proximity validation carried out between the geoposition device and the mobile computing device using a Bluetooth connection, is configured to receive the obtained geoposition of the user from the geoposition device using a cryptographic protocol, and to receive, from the mobile computing device, a geoposition of the mobile computing device, using a cryptographic protocol. Additionally, in the proposed system, the mobile computing device further receives, from the computer server, a notification regarding successful geoposition validation with the geoposition device; records a voiced video of the user using at least one camera and microphone thereof, where the voiced video is recorded while the user is uttering a given phrase or word; detects a user's unframing movement, and creates a geo-evidence for the user using its own geoposition and the recorded voiced video.

Particularly, the user's unframing movement is detected using a gyroscope and/or accelerometer of the mobile computing device.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 schematically illustrates the proposed architecture for proving a user's geolocation, according to an embodiment.
Fig. 2 schematically illustrates an example of the proposed user's unframing movement.

### DETAILED DESCRIPTION OF THE INVENTION AND OF PREFERRED EMBODIMENTS

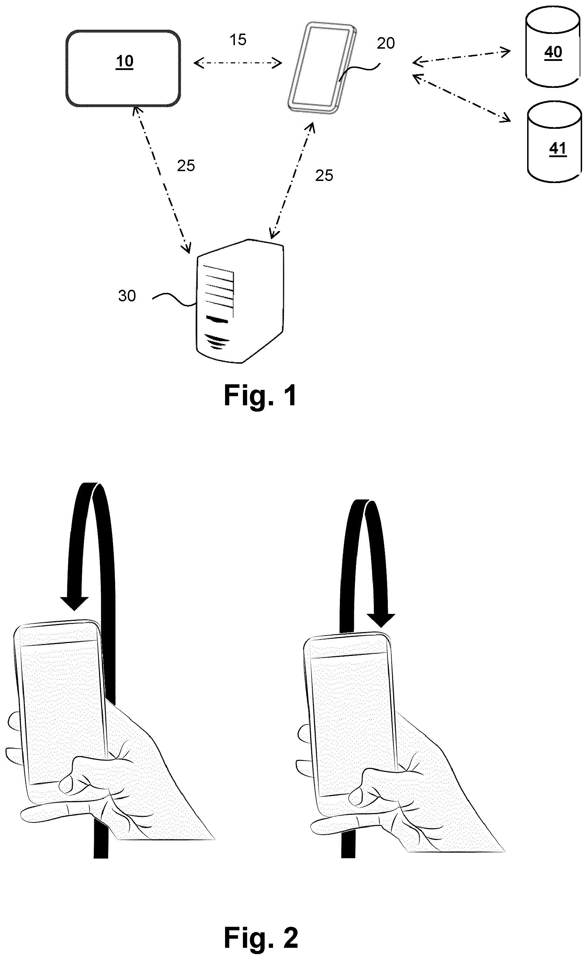

The present invention provides a method and corresponding system for verifying a user's geolocation. As illustrated in Fig. 1, the system of this embodiment is formed by a geoposition device 10, a mobile computing device 20, a computer server 30, which may include multiple servers, and two or more blockchains 40, 41.

The mobile computing device 20 can include a smartphone or tablet personal computer with a dedicated software application that is used during the verification process to create the geo-evidence for the users.

The geoposition device 10 is responsible for obtaining the user's geolocation via satellite triangulation (e.g. GPS coordinates). The geoposition device includes a SIM card or similar component to facilitate secure communication with the computer server 30 through a cryptographic protocol 25, such as SSL. The device also employs asymmetric key cryptography (PKI) with a private key stored in its memory, while the associated public key is hosted on the computer server 30 to establish a secure link.

Additionally, the device can establish a Bluetooth connection 15 with the mobile computing device 20, an essential feature for ensuring that both devices are in close proximity-thereby confirming the robustness of the geolocation verification process.

In some embodiments, access to the geoposition device's information and configuration is secured by a password, which may consist of a combination of letters, numbers, and symbols. If an incorrect password is entered more than a specified number of times (e.g., three or five attempts), the geoposition device 10 becomes locked, restricting further access to its information and/or configuration settings. This security measure ensures that only authorized users can manage or retrieve data from the device.

When a user wishes to create geo-evidence to prove/verify their geolocation, they activate the geoposition device 10 to establish satellite coverage. Once the user's geoposition is obtained, a Bluetooth connection 15 is initiated between the geoposition device 10 and the mobile computing device 20, confirming both devices 10, 20 are close to each other. The geoposition device 10 then transmits the user's location data to the computer server 30 for storage.

Similarly, the user accesses the dedicated software application installed in the mobile computing device 20, which retrieves its own location data and transmits it to the computer server 30 for further geoposition validation. Both location data transmissions occur through distinct communication channels, particularly using the SSL protocol.

To proceed with the user verification and create corresponding geo-evidence, the user records a voiced video while reading or speaking a specific phrase or word displayed on the mobile computing device screen. In the invention, the phrase or word is updated periodically (e.g., daily) to prevent reuse of old images or recordings, ensuring a real-time verification process. The updated phrase or word can serve as a historical log of the user's images and voice if needed for future administrative or judicial purposes.

To further secure the authenticity of the geo-evidence and ensure that the user is next to the geoposition device 10 and that a screen recording is not being used, the method requires detection of an "unframing movement". This movement, captured by the mobile computing device 20, in particular using one of the gyroscopes and/or accelerometers thereof, must occur for the geolocation verification to be completed; otherwise, the process will be canceled. A timeout parameter may be used to detect if the unframing movement has not been completed within the set period, automatically canceling the geo-evidence creation. This requirement further guarantees that the verification is performed in real time, and prevents the use of pre-recorded or falsified data.

Referring to Fig. 2, this figure illustrates a particular embodiment of the user's unframing movement, where the mobile computing device 20 is moved first towards and then away from the user. In other embodiments (not shown), the unframing movement may consist of different motions. For example, as moving the mobile computing device 20 up and down or from left to right (or vice versa) relative to the user.

Referring back to the system illustrated in Fig. 1, the security of the proposed method can be further enhanced by incorporating blockchain databases 40, 41. It should be noted that, in alternative embodiments not illustrated here, the use of two or more blockchains 40, 41 may be omitted. In certain implementations, the blockchains used are non-permissioned.

In this approach, a video frame or screenshot from the recorded voiced video is captured, and a map is generated using this screenshot along with the geoposition of the mobile computing device. This map is then hashed to create a first hash. Similarly, the voiced video in which the user reads or utters the specific phrase or word is processed to produce a second hash. Both first and second hashes are then transmitted to respective blockchain networks 40, 41. For example, the invention can employ the SHA-256 algorithm for hashing both the screenshot/map and the video recording, ensuring robust data integrity. Incorporation into the blockchains is done using Smart Contracts.

Once incorporated into the blockchains 40, 41, each hash receives a timestamp reflecting the exact time of incorporation, creating a verifiable record. The resulting certificate of the created geo-evidence includes direct links to verify, "in situ," the presence of these hashes on each blockchain network 40, 41, providing a secure and immutable reference for the geolocation data.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A method to prove a user's geolocation, the method comprising:
obtaining a geoposition of a user by a geoposition device (10);
carrying out a proximity validation between the geopositioning device (10) and a mobile computing device (20) by means of a Bluetooth connection (15);
upon successful proximity validation between the geoposition device (10) and the mobile computing device (20), a computer server (30) receiving the geoposition of the user from the geoposition device (10) using a cryptographic protocol (25), and receiving a geoposition of the mobile computing device (20), from the mobile computing device (20), using a cryptographic protocol (25);
receiving, by the mobile computing device (20), from the computer server (30), a notification regarding successful geoposition validation with the geoposition device (10);
recording, in real time, a voiced video of the user by at least one camera and microphone of the mobile computing device (20), the voiced video being recorded while the user is uttering a given phrase or word;
detecting a user's unframing movement by the mobile computing device (20); and
creating, by the mobile computing device (20), a geo-evidence for the user using the geoposition of the mobile computing device (20) and the recorded voiced video.

2. The method of claim 1, further comprising:
obtaining at least one video frame of the recorded voiced video, and creating a map using the at least one video frame and the geoposition of the mobile computing device (20);
hashing the created map with a first hash, and forwarding the hashed map to a first blockchain network (40); and
hashing the recorded voiced video with a second hash, and forwarding the hashed voiced video to a second blockchain network (41).

3. The method of any one of the previous claims, wherein the given phrase or word is periodically changed.

4. The method of any one of the previous claims, further comprising storing the recorded voiced video in a memory or database.

5. The method of any one of the previous claims, wherein the geoposition of the user is obtained by satellite triangulation.

6. The method of any one of the previous claims, wherein the cryptographic protocol (25) comprises a SSL protocol.

7. The method of any one of the previous claims, wherein the geoposition device (10) comprises a private key based on asymmetric key cryptography under PKI protocol, and the computer server (30) comprises a corresponding public key.

8. The method of any one of the previous claims, wherein access to information and/or configuration of the geoposition device (10) is password protected.

9. The method of claim 8, wherein the password is only known by an owner of the computer server (30), and wherein if an incorrect password is entered more than three times, the positioned device (10) is locked without being able to access the information and/or configuration.

10. The method of any one of the previous claims, wherein the user's unframing movement comprises at least one of the following: a movement of the mobile computing device (20) towards and away from the user, up and down relative to the user, left and right, or a combination thereof.

11. The method of any one of the previous claims, further comprising:
setting a timeout parameter for detecting the user's unframing movement; and
automatically cancelling the creation of the geo-evidence if the timeout parameter elapses without having detected the user's unframing movement.

12. A system to prove a user's geolocation, comprising:
a geoposition device (10) configured to obtain a geoposition of a user;
a mobile computing device (20); and
a computer server (30);
the computer server (30), upon successful proximity validation between the geoposition device (10) and the mobile computing device (20) by means of a Bluetooth connection (15), being configured to:
receive, from the geoposition device (10), the obtained geoposition of the user using a cryptographic protocol (25), and
receive, from the mobile computing device (20), a geoposition of the mobile computing device (20) using a cryptographic protocol (25); and
the mobile computing device (20) being configured to:
receive, from the computer server (30), a notification regarding successful geoposition validation with the geoposition device (10);
record, in real time, a voiced video of the user using at least one camera and microphone of the mobile computing device (20), the voiced video being recorded while the user is uttering a given phrase or word;
detect a user's unframing movement; and
create a geo-evidence for the user using its geoposition and the recorded voiced video.

13. The system of claim 12, further comprising two blockchain networks, wherein one of the blockchain networks is configured to receive a hashed map and the other is configured to receive a hashed voiced video, the hashed map being obtained by hashing a map created using at least one video frame of the recorded voiced video and the geoposition of the mobile computing device (20) with a first hash, and the hashed voiced video being obtained by hashing the recorded voiced video with a second hash.

14. The system of claim 12, wherein the user's unframing movement is detected using at least one of a gyroscope or accelerometer of the mobile computing device (20).

15. The system of claim 12, wherein access to the geoposition device (10) is password protected.
